Europäisches Patentamt

European Patent Office

Office européen des brevets

(11) Veröffentlichungsnummer: **0 034 242**
**B1**

(12) **EUROPÄISCHE PATENTSCHRIFT**

(19)

(45) Veröffentlichungstag der Patentschrift:
02.05.85

(21) Anmeldenummer: 81100070.2

(22) Anmeldetag: 08.01.81

(51) Int. Cl.⁴: **B 60 H 1/00,** F 24 D 7/00,
F 24 J 3/00

(54) **Einrichtung zum Aufheizen von Raumluft.**

(30) Priorität: 16.02.80 DE 3005966

(43) Veröffentlichungstag der Anmeldung:
26.08.81 Patentblatt 81/34

(45) Bekanntmachung des Hinweises auf die Patenterteilung:
02.05.85 Patentblatt 85/18

(84) Benannte Vertragsstaaten:
AT CH FR GB LI NL SE

(56) Entgegenhaltungen:
DE - A - 1 909 161
DE - A - 2 052 894
DE - A - 2 527 293
DE - A - 2 709 277
DE - A - 2 928 999
DE - A - 2 932 448
DE - B - 1 016 885
DE - B - 2 623 621
DE - C - 906 303
FR - A - 2 315 666
GB - A - 691 556
GB - A - 747 024
GB - A - 749 023
US - A - 2 621 857
US - A - 2 749 049
US - A - 3 540 651

(73) Patentinhaber: Klöckner-Humboldt-Deutz
Aktiengesellschaft,
Deutz-Mülheimer-Strasse 111 Postfach 80 05 09,
D-5000 Köln 80 (DE)

(72) Erfinder: Tholen, Paul, Dipl.-Ing., Im Lüh 19,
D-5060 Berg.-Gladbach (DE)

(56) Entgegenhaltungen: (Fortsetzung)
US - A - 3 591 079
US - A - 3 720 372

**Beschreibung**

Die Erfindung betrifft eine Einrichtung zum Aufheizen von Raumluft mit einem in einem Hauptkreislauf angeordneten Hauptwärmetauscher, der von Abwärme einer Maschine, insbesondere von Abwärme einer Brennkraftmaschine, erwärmt wird und mit einem in einem Zusatzheizkreislauf angeordneten Zusatzwärmetauscher, der mit einem Heizmedium beaufschlagbar ist, das in einer eine Hydraulikpumpe aufweisenden Einrichtung erwärmbar ist.

Eine derart gattungsgemässe Einrichtung ist aus der GB-A-749 023 bekannt. Hierbei ist die das Heizmedium erwärmende Einrichtung als hydrodynamische Bremseinrichtung ausgebildet. Die dem Heizmedium über ein Pumpenlaufrad zugeführte kinetische Energie wird in einem als Stator ausgebildeten Turbinenrad aufgrund der dort stattfindenden Vermischungen und Turbulenzen in Reibungswärme umgesetzt. Dies kann jedoch mit einem nicht befriedigenden Gesamtwirkungsgrad und insbesondere auch bei tiefen Umgebungstemperaturen in nur unzureichender Weise erfolgen, da für eine maximale Wärmeerzeugung das Turbinenrad mittels einer Magneteinrichtung abgebremst werden muss, was zur Folge hat, dass ein sehr grosser Anteil der mechanisch dem Pumpenrad zugeführten Energie in dem Bremsmagneten in Wärme umgesetzt wird und somit für eine Erwärmung des Heizmediums verloren ist.

Aus der US-A-2 621 857 ist es bekannt, einen eine Brenneinrichtung aufweisenden Zusatzwärmetauscher luftseitig in Reihe hinter dem Hauptwärmetauscher anzuordnen. Diese Anordnung erfordert allerdings aufgrund der für die Brenneinrichtung erforderlichen Brennstoffversorgung, Zündsystem und dergl. einen erheblichen Bauaufwand.

Weiterhin ist eine Einrichtung zum Beheizen der Bedienungskabine einer Brennkraftmaschine bekannt, in der erwärmtes Schmieröl einem Wärmetauscher in der Bedienungskabine zugeführt wird (DE-B-2 623 621). Diese Heizung ist bei betriebswarmem Motor voll funktionsfähig, bietet jedoch in der Warmlaufphase nur langsam und bei Leerlaufbetrieb nur unzureichend Heizwärme an. Gerade in diesen Betriebszuständen, die z.B. für innerstädtischen Verkehr bezeichnend sind, ist der Wärmebedarf zum schnellen, gegebenenfalls wiederholten Aufheizen der Kabine und zum Freihalten der Scheiben besonders hoch.

Ausgehend von diesem Stand der Technik ist daher die Aufgabe gestellt, eine Einrichtung der eingangs genannten Art dahingehend zu verbessern, dass insbesondere in unzureichend versorgten Betriebsphasen, z.B. der Warmlaufphase der Brennkraftmaschine, oder für erschwerte Betriebsverhältnisse, z.B. bei tiefen Aussentemperaturen, die zu Heizzwecken verfügbare Wärmemenge erhöht ist.

Zur Lösung dieser Aufgabe wird erfindungsgemäss vorgeschlagen, dass der Hydraulikpumpe ein Druckabbauelement, insbesondere eine Drossel, nachgeschaltet ist und dass der Zusatzwärmetauscher luftseitig in Reihe hinter dem Hauptwärmetauscher angeordnet ist. Hiermit ist eine Einrichtung mit einem flüssigen Heizmittel gegeben, die wartungsgünstig, einbaufreundlich, vorzugsweise von der vorhandenen Maschine angetrieben allein durch Druckaufbau in der Hydraulikpumpe und Umwandlung in Wärme im Druckabbauelement die erforderliche Zusatzwärmemenge in einem Zusatzwärmetauscher zur Verfügung stellt. Sie bietet den Vorteil, dass die bewährte Heizungseinrichtung mit den vorhandenen Luftführungen, Verstelleinrichtungen und dergl. nicht geändert werden muss und dass die zusätzliche Einrichtung nur für eine Grundlast bzw. Spitzenlast auszulegen ist.

Der Zusatzheizkreislauf kann völlig unabhängig nach den gegebenen Möglichkeiten angebracht werden, insbesondere bezüglich der Anordnung der Hydraulikpumpe an einen geeigneten Antrieb. Die zusätzlichen Einrichtungen haben sehr geringe Abmessungen und können in günstiger Weise, mit Ausnahme des Wärmetauschers, zu einem kompakten Bauteil zusammengefasst werden, das leicht an einem vorhandenen Motor Platz findet. Eine Kombination des Zusatzheizkreislaufes ist nicht nur mit einem Hauptheizkreislauf möglich, in dem das Motorschmieröl als Heizmittel dient, sondern daneben auch mit solchen Einrichtungen, in denen z.B. Kühlwasser oder Hydrauliköl die Abwärme einer Maschine bzw. die Reibungswärme aus Arbeitsvorrichtungen aufnehmen.

Durch die erfindungsgemässe Anordnung des Zusatzwärmetauschers luftseitig in Reihe hinter dem Hauptwärmetauscher können die Heizluftführungen, Steuerklappen und Gebläse unverändert bleiben. Die Reihenfolge der Anordnung ergibt sich aus der Tatsache, dass sich der Zusatzheizkreislauf schneller erwärmt und ein höheres Temperaturniveau hat, so dass die Wärme des Hauptheizkreislaufes bei langsam steigender Temperatur eine zunehmende Vorwärmung der Heizluft bewirkt.

Sowohl in Bezug auf den Einbau als auch auf die Wärmeübertragung ist es besonders günstig, den Haupt- und den Zusatzwärmetauscher zu einem Bauelement mit Gegenstrom oder Kreuzstrom der beiden Heizmittelströme zusammenzufassen.

Eine besondere Wartungsvereinfachung ist dadurch möglich, dass der Zusatzheizkreislauf erfindungsgemäss in sich abgeschlossen und versiegelt ausgeführt wird. Hierbei können ausserdem durch ein erhöhtes Druckniveau Verdampfungserscheinungen beim Druckabbau im Zusatzheizkreislauf vermieden werden.

Für die Auswahl der Heizmittel für die beiden Kreisläufe bieten sich verschiedene erfindungsgemässe Lösungen an. So ist es bei einer wassergekühlten Brennkraftmaschine günstig, den Hauptheizkreislauf mit dem Kühlwassersystem und den Zusatzheizkreislauf mit dem Schmierölsystem zu verbinden, da der grösste Anteil der nutzbaren Abwärme auf das Kühlwasser übergeht und da mit dem Schmieröl ein für die Druckerhöhung geeignetes Heizmittel bereits zur Verfügung steht. Weiterhin ist dabei vorteilhaft, dass das Schmieröl schneller erwärmt wird und dass bei warmem Motor ein weiterer Anteil der Abwärme als Heizwärme verfügbar ist. Sofern ein Hydrauliksystem vorhanden ist, kann der Zusatzheizkreislauf an dieses angeschlossen werden, zumal Hydrauliköl in besonderer Weise für die vorgesehene Druckerhöhung geeignet ist.

Zur Vereinfachung der Einrichtung können der Hauptheizkreislauf und der Zusatzheizkreislauf vorzugsweise über einen gemeinsamen Sammelbehälter miteinander verbunden werden. Hierfür bietet sich bei Anlagen mit einer Brennkraftmaschine besonders die Ölwanne an. Zur Verbesserung der Wirksamkeit kann bei der genannten Anordnung ausserdem eine Verbindungsleitung zwischen den Kreisläufen mit einer den Durchfluss zum Zusatzheizkreislauf sperrenden Rücklaufklappe vorgesehen werden. Bei ausreichendem Heizwärmeangebot im Hauptheizkreislauf kann die Hydraulikpumpe stillgesetzt werden, wodurch der Zusatzwärmetauscher über die Verbindungsleitung mit der sich öffnenden Rückschlagklappe in den Hauptheizkreislauf einbezogen wird. Dadurch vergrössert sich die wirksame Wärmetauscheroberfläche in diesem Kreislauf, wodurch die Heizwirkung verbessert wird. Die gleiche Wirkung wird dadurch erreicht, dass die weiter betriebene Hydraulikpumpe über ein verstellbares Wegeventil und eine Absteuerleitung drucklos in den Sammelbehälter oder zur Ansaugseite fördert.

Eine wesentliche Beeinträchtigung der schnellen Temperaturerhöhung im Zusatzheizkreislauf kann dadurch gegeben sein, dass der Sammelbehälter, insbesondere ein gemeinsamer Sammelbehälter für beide Kreisläufe, einen grossen Heizmittelinhalt hat, der einen erheblichen Teil der am Druckabbauelement erzeugten Wärme zunächst aufnimmt. Ist dies gegeben, so kann durch einen Mengenteiler im Zusatzheizkreislauf z.B. temperatur- oder zeitabhängig bewirkt werden, dass die Umlaufmenge ganz oder teilweise unter Umgehung des Sammelbehälters im Kurzschluss gefördert und erwärmt wird. Dabei kann der Mengenteiler hinter dem Zusatzwärmetauscher, oder auch, damit vor einer ersten Beaufschlagung bereits eine wesentliche Temperatursteigerung erfolgt, vor dem Wärmetauscher angeordnet sein.

Verschiedene Ausführungsbeispiele der Erfindung sind in den Abbildungen dargestellt und nachstehend näher erläutert.

Fig. 1 zeigt einen Hauptheizkreislauf und einen Zusatzheizkreislauf mit getrennten Heizmittelsystemen,

Fig. 2 zeigt einen offenen Hauptheizkreislauf und einen in sich abgeschlossenen, versiegelten Zusatzheizkreislauf,

Fig. 3 zeigt einen in sich abgeschlossenen, versiegelten Zusatzheizkreislauf in besonderer Ausgestaltung,

Fig. 4 zeigt einen Haupfheizkreislauf und einen Zusatzheizkreislauf mit einem gemeinsamen Heizmittelsystem.

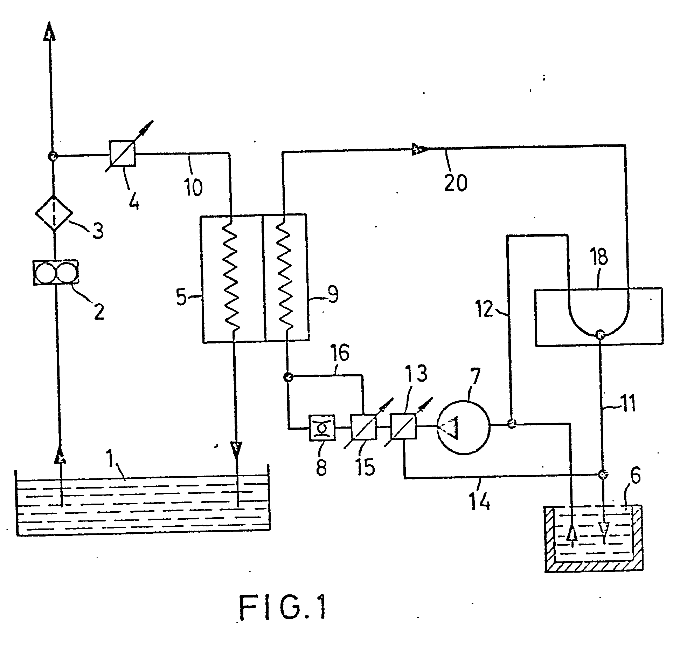

In Fig. 1 weist der Hauptheizkreislauf 10 einen Sammelbehälter 1 mit einer Heizmittelfüllung auf, die an beliebiger Stelle im Kreislauf Abwärme einer Maschine aufnimmt. Das Heizmittel wird von einer Pumpe 2 geeigneter Bauart über einen Filter 3 dem Hauptwärmetauscher 5 zugeführt und fliesst zurück in einen Sammelbehälter 1. Hinter dem Filter 3 ist der Hauptheizkreislauf 10 verzweigt und führt in einem nicht dargestellten Verlauf, der ebenfalls in den Sammelbehälter 1 zurückführt, parallel zum Hauptwärmetauscher 5 zu anderen Baugruppen der betreffenden Maschine. Dies können je nach Art der Kreisläufe Wasserräume einer zu kühlenden Maschine, Druckölverbraucher, Schmierstellen oder anderes sein. Der Mengenstrom zum Hauptwärmetauscher 5 ist durch eine Drossel 4 einzustellen oder zu regeln. Der Hauptheizkreislauf 10 kann auch unverzweigt in Reihenschaltung aller Baugruppen einschliesslich des Hauptwärmetauschers 5 ausgelegt sein. Der Zusatzheizkreislauf 20 hat ebenfalls einen Sammelbehälter 6, mit einer besonders druckbeständigen Heizmittelfüllung. Diese wird von einer Hydraulikpumpe 7 über ein Druckabbauelement 8 zum Zusatzwärmetauscher 9 gefördert, der mit dem Hauptwärmetauscher 5 luftseitig in Reihenschaltung zusammengefasst ist. Der Zusatzheizkreislauf 20 ist verzweigt und weist mehrere Regeleinrichtungen auf. Hinter dem Zusatzwärmetauscher 9 befindet sich ein Mengenteiler 18, der z.B. zeitabhängig oder vorzugsweise temperatur- oder viskositätsabhängig das Mengenstromverhältnis zwischen einer Rücklaufleitung 11 zum Sammelbehälter 6 und einer Kurzschlussleitung 12 zur Saugseite der Hydraulikpumpe 7 regelt. Um den Mengenstrom zum Zusatzwärmetauscher 9 bei ununterbrochenem Antrieb der Hyraulikpumpe 7 zu steuern, ist auf der Druckseite ein Wegeventil 13 angeordnet, das eine zum Sammelbehälter 6 führende Absteuerleitung 14 beherrscht. Bei ausreichendem Wärmeangebot im Zusatzheizkreislauf kann über ein Steuerorgan 15 eine Bypassleitung 16 parallel zum Druckabbauelement 8 geöffnet werden.

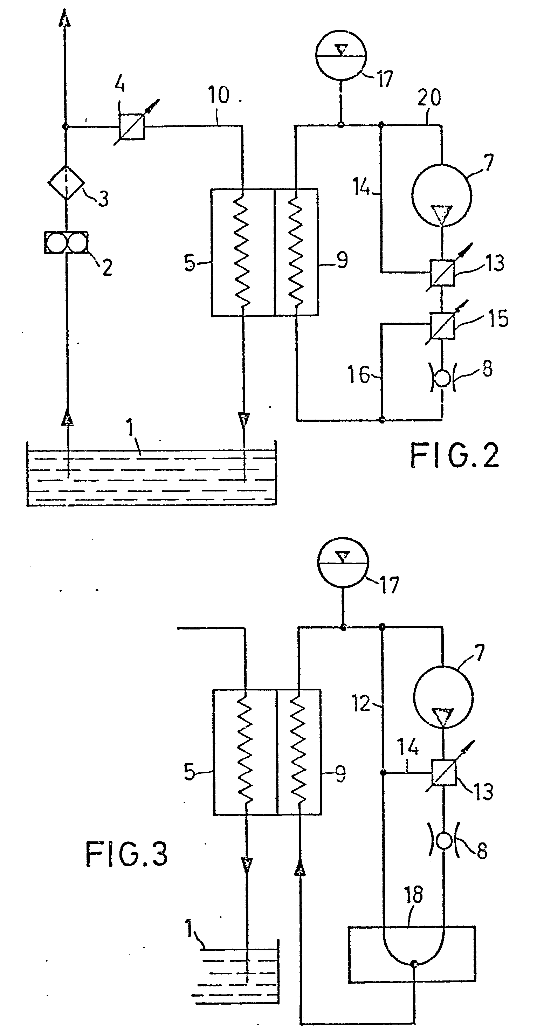

In Fig. 2 ist der Hauptheizkreislauf 10 in gleicher Weise ausgeführt wie in Fig. 1, der Zusatzheizkreislauf 20 ist in sich geschlossen und hat anstelle eines Sammelbehälters einen Füllungsstandsausgleichsbehälter 17. Als Regeleinrichtungen sind das Wegeventil 13 mit der Absteuerleitung 14 und das Steuerorgan 15 mit der Bypassleitung 16 vorzufinden.

In Fig. 3 ist allein eine besondere Ausführung des Zusatzheizkreislaufs 20 nach Fig. 2 gezeigt mit einem Wegeventil 18 zwischen Druckabbauelement 8 und Zusatzwärmetauscher 9, das bis zur ausreichenden Erwärmung eine Heizmittelteilmenge über die Kurzschlussleitung 12 in einen sich schnell erwärmenden Kreislauf mit der Hydraulikpumpe 7 steuert. Ein Wegeventil 13 mit einer Absteuerleitung 14 zur Beschränkung der Wärmeerzeugung ist ebenfalls gezeigt.

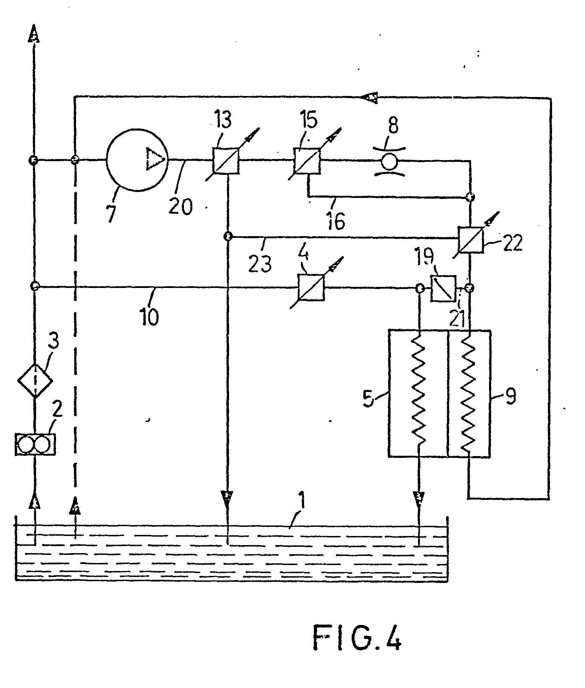

In Fig. 4 ist zwischen dem Hauptheizkreislauf 10 und dem Zusatzheizkreislauf 20 über einen gemeinsamen Sammelbehälter 1 und über eine Verbindungsleitung 21 mit einer Rückschlagklappe bzw. Rückschlagventil 19 eine Verbindung für den Betrieb mit einem einheitlichen Heizmittel hergestellt. Die Hydraulikpumpe 7 kann, wie angedeutet, aus dem Sammelbehälter 1 oder aus dem Hauptheizkreislauf hinter der Pumpe 2 bzw. dem Filter 3 ansaugen. Ein zweites Wegeventil 22 im Zusatzheizkreislauf 20 ist hinter dem Druckabbauelement 8 angeordnet und mit der Absteuerleitung 14 durch eine Leitung 23 verbunden. Sie bietet die Möglichkeit einer zusätzlichen Erwärmung des Heizmittels im Druckabbauelement 8 ohne unmittelbare Beaufschlagung des Zusatzwärmetauschers 9.

**Patentansprüche**

1. Einrichtung zum Aufheizen von Raumluft mit einem in einem Hauptkreislauf (10) angeordneten Hauptwärmetauscher (5), der von Abwärme einer Maschine, insbesondere von Abwärme einer Brennkraftmaschine, erwärmt wird und mit einem in einem Zusatzheizkreislauf (20) angeordneten Zusatzwärmetauscher (9), der mit einem Heizmedium beaufschlagbar ist, das in einer eine Hydraulikpumpe (7) aufweisenden Einrichtung (7, 8,) erwärmbar ist, dadurch gekennzeichnet, dass der Hydraulikpumpe (7) ein Druckabbauelement (8), insbesondere eine Drossel, nachgeschaltet ist und dass der Zusatzwärmetauscher (9) luftseitig in Reihe hinter dem Hauptwärmetauscher (5) angeordnet ist.

2. Einrichtung nach Anspruch 1, dadurch gekennzeichnet, dass der Zusatzheizkreislauf (20) in sich abgeschlossen und versiegelt ist.

3. Einrichtung nach einem der Ansprüche 1 oder 2, dadurch gekennzeichnet, dass der Hauptwärmetauscher (5) und der Zusatzwärmetauscher (9) zu einem Bauelement zusammengefasst sind und dass der Hauptheizkreislauf (10) und der Zusatzheizkreislauf (20) darin flüssigkeitsdicht im Gegenstrom oder im Kreuzstrom verlaufen.

4. Einrichtung nach einem der Ansprüche 1 bis 3, dadurch gekennzeichnet, dass der Hauptheizkreislauf (10) an ein Kühlwassersystem und der Zusatzheizkreislauf (20) an ein Schmierölsystem angeschlossen ist.

5. Einrichtung nach einem der Ansprüche 1 bis 3 mit einem zusätzlichen Hydrauliksystem, dadurch gekennzeichnet, dass der Hauptheizkreislauf (10) an ein Kühlwasser- oder Schmierölsystem und der Zusatzheizkreislauf (20) an das Hydrauliksystem angeschlossen ist.

6. Einrichtung nach einem der Ansprüche 1 bis 3, dadurch gekennzeichnet, dass der Hauptheizkreislauf (10) und der Zusatzheizkreislauf (20) an das Schmierölsystem der Brennkraftmaschine angeschlossen sind.

7. Einrichtung nach einem der Ansprüche 1 bis 3, dadurch gekennzeichnet, dass der Hauptheizkreislauf (10) und der Zusatzheizkreislauf (20) durch einen gemeinsamen Sammelbehälter (1) oder dergl. miteinander verbunden sind.

8. Einrichtung nach einem der vorhergehenden Ansprüche, dadurch gekennzeichnet, dass unmittelbar vor den Wärmetauschern (5, 9) eine vom Hauptheizkreislauf (10) zum Zusatzheizkreislauf (20) führende Verbindungsleitung (21) mit einer Rückschlagklappe (19) eingefügt ist.

9. Einrichtung nach einem der vorhergehenden Ansprüche, dadurch gekennzeichnet, dass im Hauptheizkreislauf (10) eine verstellbare oder regelbare Drossel (4) angeordnet ist, die den Durchflussquerschnitt bestimmt.

10. Einrichtung nach einem der vorhergehenden Ansprüche, dadurch gekennzeichnet, dass im Zusatzheizkreislauf (20) hinter dem Zusatzwärmetauscher (9) ein verstellbarer oder regelbarer Mengenteiler (18) angeordnet ist, der eine unmittelbar von der Abströmseite des Zusatzwärmetauschers (9) zur Ansaugseite der Hydraulikpumpe führende Kurzschlussleitung (12) beherrscht.

11. Einrichtung nach einem der vorhergehenden Ansprüche, dadurch gekennzeichnet, dass im Zusatzheizkreislauf (20) hinter dem Druckabbauelement (8) ein verstellbarer oder regelbarer Mengenteiler (18) angeordnet ist, der eine unmittelbar von der Abströmseite des Druckabbauelements (8) zur Ansaugseite der Hydraulikpumpe (7) führende Kurzschlussleitung (12) beherrscht.

12. Einrichtung nach einem der vorhergehenden Ansprüche, dadurch gekennzeichnet, dass im Zusatzheizkreislauf (10) parallel zum Druckabbauelement (8) eine Bypassleitung (16) vorgesehen ist, die von einem verstellbaren oder regelbaren Steuerorgan (15) beherrscht wird.

13. Einrichtung nach einem der Ansprüche 7 bis 12, dadurch gekennzeichnet, dass im Zusatzheizkreislauf (20) hinter dem Druckabbauelement (8) ein Stellventil (22) vorgesehen ist, das eine unmittelbar oder mittelbar in den Sammelbehälter (1) mündende Rücklaufleitung (23) beherrscht.

**Claims**

1. A space-heating means comprising a main heat-exchanger (5) which is arranged in a main circuit (10) and is heated by the waste heat from an engine, in particular the waste heat from a combustion engine, and comprising an additional heat-exchanger (9) which is arranged in an additional heating circuit (20) and can be acted upon by a heating medium which can be heated in a unit (7, 8) comprising a hydraulic pump (7), characterized in that a pressure-reducing element (8), in particular a throttle, is connected downstream of the hydraulic pump (7), and in that the additional heat-exchanger (9) is arranged in series at the air side to the rear of the main heat-exchanger (5).

2. A means according to Claim 1, characterized in that the additional heating circuit (20) is separately closed off and sealed.

3. A means according to Claim 1 or Claim 2, characterized in that the main heat-exchanger (5) and the additional heat-exchanger (9) are combined to form a single component, and in that the main heating circuit (10) and the additional heating circuit (20) therein extend in a fluid-tight manner in a counter-flow or transverse flow arrangement.

4. A means according to any one of Claims 1 to 3, characterized in that the main heating circuit (10) is connected to a cooling-water system, and the additional heating circuit (20) to a lubricating oil system.

5. A means according to any one of Claims 1 to 3 with an additional hydraulic system, characterized in that the main heating circuit (10) is connected to a cooling-water system or a lubricating oil system, and the additional heating circuit (20) is connected to the hydraulic system.

6. A means according to any one of Claims 1 to 3, characterized in that the main heating circuit (10) and the additional heating circuit (20) are connected to the lubricating oil system of the combustion engine.

7. A means according to any one of Claims 1 to 3, characterized in that the main heating circuit (10) and the additional heating circuit (20) are interconnected by a common collecting container (1) or the like.

8. A means according to any one of the preceding Claims, characterized in that a connecting pipe (21) leading from the main heating circuit (10) to the additional heating circuit (20) and comprising a non-return valve (19) is interposed immediately in front of the heat-exchangers (5, 9).

9. A means according to any one of the preceding Claims, characterized in that a displaceable or adjustable throttle (4) which determines the flow cross-section is arranged in the main heating circuit (10).

10. A means according to any one of the preceding Claims, characterized in that a displaceable or adjustable quantity divider (18) is arranged in the additional heating circuit (20) and to the rear of the additional heat-exchanger (9), which quantity divider controls a bypass pipe (12) leading directly from the discharge side of the additional heat-exchanger (9) to the suction side of the hydraulic pump.

11. A means according to any one of the preceding Claims, characterized in that a displaceable or adjustable quantity divider (18) is arranged in the additional heating circuit (20) and to the rear of the additional heat-exchanger (9), which quantity divider controls a bypass pipe (12) leading directly from the discharge side of the pressure-reducing element (8) to the suction side of the hydraulic pump (7).

12. A means according to any one of the preceding Claims, characterized in that a bypass pipe (16) which is controlled by a displaceable or adjustable control member (15) is provided in the additional heating circuit (10) and in parallel with the pressure-reducing element (8).

13. A means according to any one of Claims 7 to 12, characterized in that a servo valve (22) which controls a return pipe (23) discharging directly or indirectly into the collecting container (1) is provided in the additional heating circuit (20) and to the rear of the pressure-reducing element (8).

**Revendications**

1. Installation pour le chauffage de l'air d'un espace, avec un échangeur de chaleur principal (5), disposé dans un circuit de chauffage principal (10) qui est échauffé par la chaleur perdue d'une machine, notamment d'un moteur à combustion interne, et avec un échangeur de chaleur supplémentaire (20), disposé dans un circuit de chauffage supplémentaire (20), pouvant être chargé avec un fluide de chauffage qui est échauffé dans une installation (7, 8) comprenant une pompe hydraulique (7), installation caractérisée en ce que la pompe hydraulique (7) est suivie par un élément de chute de pression (8), notamment un étranglement, l'échangeur de chaleur supplémentaire (9) étant monté, du côté arrivée d'air, en série, à la suite de l'échangeur de chaleur principal (5).

2. Installation suivant la revendication 1, caractérisée en ce que le circuit de chauffage supplémentaire (20) est fermé sur lui-même et scellé.

3. Installation suivant l'une des revendications 1 ou 2, caractérisée en ce que l'échangeur de chaleur principal (5) et l'échangeur de chaleur supplémentaire (9) sont groupés en un même élément de construction, et le circuit de chauffage principal (10) et le circuit de chauffage supplémentaire (20) sont monté de manière étanche au fluide, à contre-courant ou à courants croisés.

4. Installation suivant l'une quelconque des revendications 1 à 3, caractérisée en ce que le circuit de chauffage principal (10) est raccordé à un système d'eau de refroidissement et le circuit de chauffage supplémentaire (20) est raccordé à un système d'huile de graissage.

5. Installation suivant l'une quelconque des revendications 1 à 3, pourvue d'un système hydraulique supplémentaire, caractérisée en ce que le circuit de chauffage principal (10) est raccordé à un système d'eau de refroidissement ou un système d'huile de graissage et le circuit de chauffage supplémentaire (20) est raccordé au système hydraulique.

6. Installation suivant l'une quelconque des revendications 1 à 3, caractérisée en ce que le circuit de chauffage principal (10) et le circuit de chauffage supplémentaire (20) sont raccordés au système d'huile de graissage du moteur à combustion interne.

7. Installation suivant l'une quelconque des revendications 1 à 3, caractérisée en ce que le circuit de chauffage principal (10) et le circuit de chauffage supplémentaire (20) sont réunis entre eux par un récipient collecteur commun (1) ou analogue.

8. Installation suivant l'une quelconque des revendications 1 à 7, caractérisée en ce que directement avant les échangeurs de chaleur (5, 9) est insérée une conduite de liaison (21) avec soupape anti-retour (19) conduisant du circuit de chauffage principal (10) vers le circuit de chauffage supplémentaire (20).

9. Installation suivant l'une quelconque des revendications 1 à 8, caractérisé en ce que, dans le circuit de chauffage principal (10), est disposé un étranglement préalable ou réglable (4) qui détermine la section d'écoulement du fluide.

10. Installation suivant l'une quelconque des revendications 1 à 9, caractérisée en ce que, dans le circuit de chauffage supplémentaire (20), à la suite de l'échangeur de chaleur supplémentaire (9) est prévu un répartiteur de courant d'écoulement préalable ou réglable (18) qui commande directement une conduite de court-circuit (12) qui s'étend du côté sortie de l'échangeur de chaleur supplémentaire (9) vers le côté aspiration de la pompe hydraulique.

11. Installation suivant l'une quelconque des revendications 1 à 10, caractérisée en ce que, dans le circuit de chauffage supplémentaire (10), à la suite de l'élément de chute de pression (8) est prévu un élément répartiteur de quantité d'écoulement, préalable ou réglable (18), qui commande directement une conduite de court-circuit (12) s'étendant à partir du côté de sortie de l'élément de chute de pression (8) vers le côté aspiration de la pompe hydraulique (7).

12. Installation suivant l'une quelconque des revendications 1 à 11, caractérisée en ce que, dans le circuit de chauffage supplémentaire (20), en parallèle avec l'élément de chute de pression (8) est prévue une conduite de by-pass (16) qui est commandée par un organe de commande positionnable ou réglable (15).

13. Installation suivant l'une quelconque des revendications 7 à 12, caractérisée en ce que, dans le circuit de chauffage supplémentaire (20), à la suite de l'élément de chute de pression (8), est prévue une soupape de réglage (22) qui commande, directement ou indirectement, une conduite de retour (23) qui débouche dans le récipient collecteur (1).

FIG.1

FIG.2

FIG.3

FIG.4